# EUROPEAN PATENT APPLICATION

(11) **EP 4 336 616 A1**
(43) Date of publication of application: **13.03.2024**
(21) Application number: 23182340.2
(22) Date of filing: 29.06.2023
(51) Int. Cl.: H01M 10/0562, H01M 10/052

(54) **SOLID ELECTROLYTE HAVING CORE-SHELL STRUCTURE AND METHOD OF MANUFACTURING THE SAME**

(30) Priority: 06.09.2022 KR 20220112552
(71) Applicant: HYUNDAI MOTOR COMPANY, Seoul 06797 (KR); Kia Corporation, Seocho-gu Seoul 06797 (KR); Hansol Chemical Co., Ltd, Seoul 06169 (KR)
(72) Inventor: LEE, Sang Soo, 18280 Hwaseong-si, Gyeonggi-do (KR); KIM, So Young, 18280 Hwaseong-si, Gyeonggi-do (KR); LEE, Sang Heon, 18280 Hwaseong-si, Gyeonggi-do (KR); MIN, Hong Seok, 18280 Hwaseong-si, Gyeonggi-do (KR); SONG, In Woo, 18280 Hwaseong-si, Gyeonggi-do (KR); JUNG, Wo Dum, 18280 Hwaseong-si, Gyeonggi-do (KR); SONG, Woo Seop, 55321 Bongdong-eup, Wanju-gun, Jeollabuk-do (KR); LEE, Young Sung, 55321 Bongdong-eup, Wanju-gun, Jeollabuk-do (KR); YOON, So Young, 55321 Bongdong-eup, Wanju-gun, Jeollabuk-do (KR); YOUN, Yung Sup, 55321 Bongdong-eup, Wanju-gun, Jeollabuk-do (KR); KWON, Se Man, 55321 Bongdong-eup, Wanju-gun, Jeollabuk-do (KR)
(74) Representative: Viering, Jentschura & Partner mbB Patent- und Rechtsanwälte

(57) **Abstract**

Disclosed are a solid electrolyte and method of manufacturing the same. The solid electrolyte may include a core including a first electrolyte represented by Chemical Formula 1, and a shell including a second electrolyte represented by Chemical Formula 2, and disposed on a surface of the core.

[Chemical Formula 1] LiₐPS_{b}X1_{c}

Here, a satisfies an equation 4≤a≤7, b satisfies an equation 3≤b≤7, c satisfies an equation 0≤c≤2, and X1 includes Br or I.

[Chemical Formula 2] Li_{d}PSₑX2_{f}

Here, d satisfies an equation 4≤d≤7, e satisfies an equation 3≤e≤7, f satisfies an equation 0≤f≤2, X2 includes Cl or Br, and an ionic radius of X1 is greater than an ionic radius of X2.

## Description

### TECHNICAL FIELD

The present disclosure relates to a solid electrolyte having a core-shell structure and a method of manufacturing the same.

### BACKGROUND

Secondary batteries which are rechargeable have been widely used in small electronic devices, such as a cellular phone and a notebook computer, and in large vehicles, such as a hybrid vehicle and an electric vehicle. Accordingly, development of secondary batteries having higher stability and energy density is required.

The conventional secondary batteries mostly include cells configured based on an organic liquid electrolyte, and are limited in improvement in stability and energy density.

All-solid-state batteries using an inorganic solid electrolyte are based on technology in which an organic solvent is excluded, and are being spotlighted because cells may be manufactured in a safer and simpler form.

A sulfide-based solid electrolyte, which is the most representative solid electrolyte for all-solid-state batteries, among solid electrolytes, which are being developed now, has problems, such as low lithium ion conductivity, instability in a crystalline phase, poor atmospheric stability, and a composition ratio of a highly conductive phase in a narrow area, and commercialization and mass production of the sulfide-based solid electrolyte are proceeding slowly.

When the sulfide-based solid electrolyte is exposed to moisture, toxic hydrogen sulfide is generated, and the sulfide-based solid electrolyte is degraded and thus lithium ion conductivity thereof is reduced. The sulfide-based solid electrolyte is vulnerable to exposure to the atmosphere, and thus has difficulty in mass production and serves as an obstacle in commercialization of all-solid-state batteries.

The above information disclosed in this Background section is only for enhancement of understanding of the background of the invention and therefore it may contain information that does not form the prior art that is already known in this country to a person of ordinary skill in the art.

### SUMMARY

In preferred aspects, the present disclosure provides a solid electrolyte having substantially improved atmospheric stability and high lithium ion conductivity.

In one aspect, the present disclosure provides a solid electrolyte including cores including a first electrolyte represented by Chemical Formula 1, and shells including a second electrolyte represented by Chemical Formula 2, and coated on surfaces of the cores.

[Chemical Formula 1] LiₐPS_{b}X1_{c}

Here, a satisfies 4≤a≤7, b satisfies 3≤b≤7, c satisfies 0≤c≤2, and X1 includes Br or I.

[Chemical Formula 2] Li_{d}PSₑX2_{f}

Here, d satisfies 4≤d≤7, e satisfies 3≤e≤7, f satisfies 0≤f≤2, X2 includes Cl or Br, and an ionic radius of X1 is greater than an ionic radius of X2.

The first electrolyte may suitably include Li₆PS₅Br, and the second electrolyte may include Li₆PS₅Cl.

A particle size D50 of the first electrolyte may be about 1 µm to 40 µm.

A particle size D50 of the second electrolyte may be about 0.5 µm to 20 µm.

A particle size D50 of the first electrolyte may be 2 times to 5 times greater than a particle size D50 of the second electrolyte.

A term "D50" as used herein refers to a median particle diameter or median particle size.

A pellet density of the solid electrolyte may be about 1.8 g/ml to 2.0 g/ml.

An average particle diameter of the solid electrolyte may be about 100 µm to 300 µm.

A hydrogen sulfide generation amount of the solid electrolyte may be equal to or less than about 100,000 ppm/g when the solid electrolyte comes into contact with air having a moisture content of about 20 wt% at room temperature.

The solid electrolyte may further include a skin layer coated on surfaces of the shells and including a third electrolyte represented by Chemical Formula 3.

[Chemical Formula 3] Li_{g}PSₕX3ᵢ

Here, g may satisfy 4≤g≤7, h may satisfy 3≤h≤7, i may satisfy 0≤i≤2, X3 may include Cl, and the ionic radius of X2 may be greater than an ionic radius of X3.

The first electrolyte may suitably include Li₆PS₅I, the second electrolyte may suitably include Li₆PS₅Br, and the third electrolyte may suitably include Li₆PS₅Cl.

In another aspect, the present disclosure provides a method of manufacturing a solid electrolyte. The method includes: preparing a first electrolyte represented by Chemical Formula 1: preparing a second electrolyte represented by Chemical Formula 2: preparing an admixture including the first electrolyte and the second electrolyte; and manufacturing the solid electrolyte including cores including the first electrolyte and shells including the second electrolyte and coated on surfaces of the cores by applying shear stress to the admixture.

[Chemical Formula 1] LiₐPS_{b}X1_{c}

Here, a satisfies 4≤a≤7, b satisfies 3≤b≤7, c satisfies 0≤c≤2, and X1 includes Br or I.

[Chemical Formula 2] Li_{d}PSₑX2_{f}

Here, d satisfies 4≤d≤7, e satisfies 3≤e≤7, f satisfies 0≤f≤2, X2 includes Cl or Br, and an ionic radius of X1 is greater than an ionic radius of X2.

The step of preparing the first electrolyte may include preparing a first solution by dissolving first precursors in a first organic solvent, preparing a first powder by drying the first solution at a temperature of about 80 °C to 150 °C, and heat-treating the first powder at a temperature of about 200 °C to 600 °C for about 1 hour to 24 hours.

The step of preparing the second electrolyte may include preparing a second solution by dissolving second precursors in a second organic solvent, preparing a second powder by drying the second solution at a temperature of about 80 °C to 150 °C, heat-treating the second powder at a temperature of about 200 °C to 600 °C for about 1 hour to 24 hours, and grinding the heat treated second powder.

The admixture may include the first electrolyte and the second electrolyte in a molar ratio of about 1:3 to 5.

The shear stress may be applied to the admixture by putting the mixture into a container and stirring the container at a rotational speed of about 69 m/s to 100 m/s for about 10 minutes to 3 hours.

A pellet density of the solid electrolyte as described herein may be about 1.8 g/ml to 2.0 g/ml. An average particle diameter of the solid electrolyte as described herein may be about 100 µm to 300 µm.

A hydrogen sulfide generation amount of the solid electrolyte as described herein may be equal to or less than about 100,000 ppm/g when the solid electrolyte comes into contact with air having a moisture content of about 20 wt% at room temperature.

Also provided is an all-solid state battery including the solid electrolyte as described herein.

Further provided is a vehicle including the all-solid state battery as described herein.

Other aspects of the invention are discussed *infra.*

### BRIEF DESCRIPTION OF THE DRAWINGS

The above and other features of the present disclosure will now be described in detail with reference to certain exemplary embodiments thereof illustrated in the accompanying drawings which are given hereinbelow by way of illustration only, and thus are not limitative of the present disclosure, and wherein:
FIG. 1 shows an exemplary all-solid-state battery according to an exemplary embodiment of the present disclosure;
FIG. 2 shows an exemplary solid electrolyte according to an exemplary embodiment of the present disclosure;
FIG. 3 shows an exemplary solid electrolyte according to an exemplary embodiment of the present disclosure;
FIG. 4A shows a Scanning Electron Microscope (SEM) image of a solid electrolyte according to Example 1;
FIG. 4B shows Energy Dispersive X-ray Spectroscopy (EDS) of the solid electrolyte according to Example 1;
FIG. 5A shows a hydrogen sulfide generation amount of the solid electrolyte according to Example 1;
FIG. 5B shows a hydrogen sulfide generation amount of a solid electrolyte according to Comparative Example 4;
FIG. 6A shows lithium ion conductivity of the solid electrolyte according to Example 1;
FIG. 6B shows lithium ion conductivity of the solid electrolyte according to Comparative Example 4;
FIG. 7A shows a Scanning Electron Microscope (SEM) image of a solid electrolyte according to Example 2;
FIG. 7B shows Energy Dispersive X-ray Spectroscopy (EDS) of the solid electrolyte according to Example 2;
FIG. 8A shows a Scanning Electron Microscope (SEM) image of a solid electrolyte according to Example 3; and
FIG. 8B shows Energy Dispersive X-ray Spectroscopy (EDS) of the solid electrolyte according to Example 3.

It should be understood that the appended drawings are not necessarily to scale, presenting a somewhat simplified representation of various preferred features illustrative of the basic principles of the invention. The specific design features of the present disclosure as disclosed herein, including, for example, specific dimensions, orientations, locations, and shapes, will be determined in part by the particular intended application and use environment.

In the figures, reference numbers refer to the same or equivalent parts of the present disclosure throughout the several figures of the drawings.

### DETAILED DESCRIPTION

The above-described objects, other objects, advantages and features of the present disclosure will become apparent from the descriptions of embodiments given hereinbelow with reference to the accompanying drawings. However, the present disclosure is not limited to the embodiments disclosed herein and may be implemented in various different forms. The embodiments are provided to make the description of the present disclosure thorough and to fully convey the scope of the present disclosure to those skilled in the art.

In the following description of the embodiments, the same elements are denoted by the same reference numerals even when they are depicted in different drawings. In the drawings, the dimensions of structures may be exaggerated compared to the actual dimensions thereof, for clarity of description. In the following description of the embodiments, terms, such as "first" and "second", may be used to describe various elements but do not limit the elements. These terms are used only to distinguish one element from other elements. For example, a first element may be named a second element, and similarly, a second element may be named a first element, without departing from the scope and spirit of the invention. Singular expressions may encompass plural expressions, unless they have clearly different contextual meanings.

In the following description of the embodiments, terms, such as "including", "comprising" and "having", are to be interpreted as indicating the presence of characteristics, numbers, steps, operations, elements or parts stated in the description or combinations thereof, and do not exclude the presence of one or more other characteristics, numbers, steps, operations, elements, parts or combinations thereof, or possibility of adding the same. In addition, it will be understood that, when a part, such as a layer, a film, a region or a plate, is said to be "on" another part, the part may be located "directly on" the other part or other parts may be interposed between the two parts. In the same manner, it will be understood that, when a part, such as a layer, a film, a region or a plate, is said to be "under" another part, the part may be located "directly under" the other part or other parts may be interposed between the two parts.

All numbers, values and/or expressions representing amounts of components, reaction conditions, polymer compositions and blends used in the description are approximations in which various uncertainties in measurement generated when these values are acquired from essentially different things are reflected and thus it will be understood that they are modified by the term "about", unless stated otherwise. Further, unless specifically stated or obvious from context, as used herein, the term "about" is understood as within a range of normal tolerance in the art, for example within 2 standard deviations of the mean. "About" can be understood as within 10%, 9%, 8%, 7%, 6%, 5%, 4%, 3%, 2%, 1%, 0.5%, 0.1%, 0.05%, or 0.01% of the stated value. Unless otherwise clear from the context, all numerical values provided herein are modified by the term "about."

In addition, it will be understood that, if a numerical range is disclosed in the description, such a range includes all continuous values from a minimum value to a maximum value of the range, unless stated otherwise. Further, if such a range refers to integers, the range includes all integers from a minimum integer to a maximum integer, unless stated otherwise. In the present specification, when a range is described for a variable, it will be understood that the variable includes all values including the end points described within the stated range. For example, the range of "5 to 10" will be understood to include any subranges, such as 6 to 10, 7 to 10, 6 to 9, 7 to 9, and the like, as well as individual values of 5, 6, 7, 8, 9 and 10, and will also be understood to include any value between valid integers within the stated range, such as 5.5, 6.5, 7.5, 5.5 to 8.5, 6.5 to 9, and the like. Also, for example, the range of "10% to 30%" will be understood to include subranges, such as 10% to 15%, 12% to 18%, 20% to 30%, etc., as well as all integers including values of 10%, 11%, 12%, 13% and the like up to 30%, and will also be understood to include any value between valid integers within the stated range, such as 10.5%, 15.5%, 25.5%, and the like.

A term "all-solid-state battery" as used herein refers to a rechargeable secondary battery that includes an electrolyte in a solid state, e.g., gel or polymer (cured), which may include an ionomer and other electrolytic components for transferring ions between the electrodes of the battery.

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g. fuels derived from resources other than petroleum). As referred to herein, a hybrid vehicle is a vehicle that has two or more sources of power, for example both gasoline-powered and electric-powered vehicles.

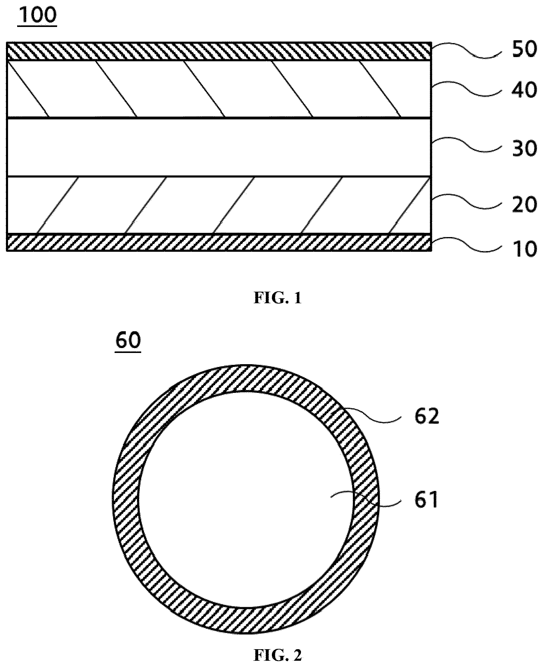

FIG. 1 shows an all-solid-state battery 100 according to an exemplary embodiment of the present disclosure. The all-solid-state battery 100 may be acquired by stacking an anode current collector 10, an anode layer 20, a solid electrolyte layer 30, a cathode 40 and a cathode current collector 50. At least one of the anode layer 20, the solid electrolyte layer 30 and the cathode layer 40 may include a solid electrolyte.

FIG. 2 shows a solid electrolyte 60 according to an exemplary embodiment of the present disclosure. The solid electrolyte 60 may include cores 61, and shells 62 coated on at least a part of the surface of each of the cores 61. The shells 62 may be configured such that each of the shells 62 may cover about 50% or more, 60% or more, 70% or more, 80% or more, 90% or more, or 99% or more of the surface of a corresponding one of the cores 61.

The cores 61 may include a first electrolyte represented by Chemical Formula 1 below.

[Chemical Formula 1] LiₐPS_{b}X1_{c}

Here, a satisfies 4≤a≤7, b satisfies 3≤b≤7, c satisfies 0≤c≤2, and X1 may include Br or I.

The shells 62 may include a second electrolyte represented by Chemical Formula 2 below.

[Chemical Formula 2] Li_{d}PSₑX2_{f}

Here, d satisfies 4≤d≤7, e satisfies 3≤e≤7, f satisfies 0≤f≤2, and X2 may include Cl or Br.

In the first electrolyte and the second electrolyte, the ionic radius of X1 may be greater than the ionic radius of X2. The ionic radius may indicate, on the assumption that ions have a spherical shape, the radius of the spherical ions.

In a solid electrolyte including a halogen element, when the ionic radius of the halogen element increases, a lattice constant increases. Thereby, lithium ions (Li⁺) in a lattice are freely moved, and thus lithium ion conductivity of the solid electrolyte is increased.

There is a trade-off between lithium ion conductivity and atmospheric stability. As the ionic radius of the halogen element increases, ionic bond energy is weakened, and ionic bonds are easily broken due to external factors, such as moisture in the atmosphere, and thus generate hydrogen sulfide.

The ionic radius of iodine (I) is about 2.2 Å, the ionic radius of bromine (Br) is about 1.96 Å, and the ionic radius of chlorine (Cl) is about 1.81 Å.

As shown in FIG. 2, an electrolyte having relatively high lithium ion conductivity may be applied to the cores 61, and an electrolyte having relatively excellent atmospheric stability is applied to the shells 62.

The cores 61 may suitably include the first electrolyte represented by Li₆PS₅I, and the shells 62 may suitably include the second electrolyte represented by Li₆PS₅Br.

For example, the cores 61 may suitably include the first electrolyte represented by Li₆PS₅I, and the shells 62 may suitably include the second electrolyte represented by Li₆PS₅Cl.

Alternatively, the cores 61 may suitably include the first electrolyte represented by Li₆PS₅Br, and the shells 62 may suitably include the second electrolyte represented by Li₆PS₅Cl.

Particularly, the shells 62 may include the second electrolyte represented by Li₆PS₅Cl. LiePSsCl including chlorine (Cl) has excellent atmospheric stability, and thus generates a small amount of hydrogen sulfide even when it reacts with moisture in the atmosphere. LiePSsCl is soft, and may thus easily fill pores between particles when a series of may be is formed. Thereby, a contact area between the particles may be increased, and thus, an all-solid-state battery having excellent lithium ion conductivity may be acquired.

The particle size D50 of the first electrolyte may be about 1 µm to 40 µm. The particle size D50 of the second electrolyte may be about 0.5 µm to 20 µm. The particle size D50 of the first electrolyte may be 2 times to 5 times greater than the particle size D50 of the second electrolyte. When the particle sizes D50 of the first electrolyte and the second electrolyte satisfy the above condition, a solid electrolyte having a core-shell structure may be manufactured.

The pellet density of the solid electrolyte 60 may be about 1.8 g/ml to 2.0 g/ml. The pellet density may be an index indicating softness of the solid electrolyte 60. The pellet density indicates the density of the solid electrolyte 60 alone except for additives, such as a binder, and may be a density value of pellets having a designated size, acquired by pressing the solid electrolyte 60, which is measured by a density meter. For example, the pellet density may be calculated by putting the solid electrolyte 60 into a pelletizer having a cylindrical shape and measuring a height difference when a pressure of about 3 metric tons is applied to the solid electrolyte 60 for about 10 seconds. When the pellet density of the solid electrolyte 60 is within the above range, the solid electrolyte 60 may fill the pores between the particles. Thereby, the contact area between the particles may be increased, and thus, lithium ion conductivity of the all-solid-state battery may be increased.

The average particle diameter of the solid electrolyte 60 may be 100 µm to 300 µm. When the average particle diameter of the solid electrolyte 60 is greater than about 300 µm, the content of the solid electrolyte 60 in the solid electrolyte layer 30 may be reduced, and thus, a short-circuit of the battery may not be prevented.

The hydrogen sulfide generation amount of the solid electrolyte 60 may be equal to or less than about 100,000 ppm/g. The hydrogen sulfide generation amount may be the amount of hydrogen sulfide generated when the solid electrolyte 60 comes into contact with air having a moisture content of about 20 wt% at room temperature. Here, "room temperature" is not particularly limited, but may mean, for example, 15°C to 25°C. In the solid electrolyte 60, the shells 62 include the second electrolyte having excellent atmospheric stability compared to the first electrolyte, and thus, the amount of hydrogen sulfide generated when the solid electrolyte 60 reacts with moisture in the atmosphere is small.

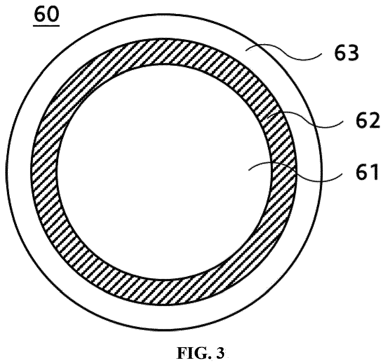

FIG. 3 shows a solid electrolyte 60 according to an exemplary embodiment of the present disclosure. The solid electrolyte 60 may include cores 61, shells 62 coated on surfaces of the cores 61, and a skin layer 63 configured to coat the surfaces of the shells 62.

The cores 61 and the shells 62 of the solid electrolyte 60 according to this embodiment of the present disclosure are substantially the same as those of the solid electrolyte 60 as described above, and a detailed description thereof will thus be omitted.

The skin layer 63 may include a third electrolyte represented by Chemical Formula 3 below.

[Chemical Formula 3] Li_{g}PSₕX3ᵢ

Here, g satisfies 4≤g≤7, h satisfies 3≤h≤7, i satisfies 0≤i≤2, and X3 may include Cl.

In the first electrolyte to the third electrolyte, the ionic radius of X1 may be greater than the ionic radius of X2, and the ionic radius of X2 may be greater than the ionic radius of X3.

The cores 61 may suitably include the first electrolyte represented by Li₆PS₅I, the shells 62 may suitably include the second electrolyte represented by Li₆PS₅Br, and the skin layer 63 may suitably include the third electrolyte represented by Li₆PS₅Cl.

The first electrolyte including iodine (I) having the greatest ionic radius may be applied to the cores 61, and the third electrolyte including chlorine (Cl) having the smallest ionic radius may be applied to the skin layer 63, thereby being capable of improving both lithium ion conductivity and atmospheric stability of the solid electrolyte 60.

A method of manufacturing a solid electrolyte may include preparing a first electrolyte represented by Chemical Formula 1 above, preparing a second electrolyte represented by Chemical Formula 2 above, preparing an admixture including the first solid electrolyte and the second solid electrolyte, and manufacturing the solid electrolyte including cores and shells by applying shear stress to the admixture.

The first electrolyte may be prepared by preparing a first solution by dissolving first precursors in a first organic solvent, preparing a first powder by drying the first solution, and heat-treating the first powder.

The first precursors may suitably include lithium sulfide (Li₂S), a sulfur compound, a lithium halide (LiX1, X1 including Br or I), etc. The sulfur compound may include silicon sulfide, phosphorous sulfide, germanium sulfide, boron sulfide, or the like, and, for example, may include phosphorous pentasulfide (P₂S₅).

The first organic solvent is not limited to a specific material, and for example, may include dimethyl formamide (DMF), tetrahydrofuran (THF), ethyl acetate (EAC), xylene, hexane, or the like.

After lithium sulfide (Li₂S) and the sulfur compound have been dissolved in the first organic solvent, the lithium halide may be put thereinto, and the first solution may be stirred to cause a rection. Otherwise, lithium sulfide (Li₂S), the sulfur compound and the lithium halide may be dissolved in the organic solvent, and the solution may be stirred to cause a reaction.

After the reaction has been completed, the first powder may be obtained by drying the first solution at a temperature of about 80 °C to 150 °C. For example, the first solution may be dried for a time sufficient to remove the first organic solvent.

The first electrolyte may be prepared by heat-treating the first powder at a temperature of about 200 °C to 600 °C for about 1 hour to 24 hours.

The second electrolyte may be prepared by preparing a second solution by dissolving second precursors in a second organic solvent, preparing a second powder by drying the second solution, heat-treating the second powder, and grinding the heat-treated second powder.

The second precursors may include lithium sulfide (Li₂S), a sulfur compound, a lithium halide (LiX2, X2 including Cl or Br), etc. The sulfur compound may include silicon sulfide, phosphorous sulfide, germanium sulfide, boron sulfide, or the like, and, for example, may include phosphorous pentasulfide (P₂S₅).

The second organic solvent is not limited to a specific material, and for example, may include dimethyl formamide (DMF), tetrahydrofuran (THF), ethyl acetate (EAC), xylene, hexane, or the like. The first and second organic solvent may be the same or different.

After lithium sulfide (Li₂S) and the sulfur compound have been dissolved in the second organic solvent, the lithium halide may be put thereinto, and the solution may be stirred to cause a rection. Otherwise, lithium sulfide (Li₂S), the sulfur compound and the lithium halide may be dissolved in the second organic solvent, and the solution may be stirred to cause a reaction.

After the reaction has been completed, the second powder may be obtained by drying the second solution at a temperature of about 80 °C to 150 °C. The second solution may be dried for a time sufficient to remove the second organic solvent.

The second powder may be heat-treated at a temperature of about 200 °C to 600 °C for about 1 hour to 24 hours.

The second electrolyte may be prepared by grinding the heat treated second powder. For example, the second powder may be ground so that the particle size D50 of the second electrolyte becomes about 1/2 to 1/3 of the particle size D50 of the first electrolyte.

The particle size D50 of the first electrolyte may be about 1 µm to 40 µm. The particle size D50 of the second electrolyte may be about 0.5 µm to 20 µm. The particle size D50 of the first electrolyte may be 2 times to 5 times the particle size D50 of the second electrolyte. When the particle sizes D50 of the first electrolyte and the second electrolyte satisfy the above condition, a solid electrolyte having a core-shell structure may be manufactured.

The admixture may be prepared by mixing the first electrolyte and the second electrolyte in a molar ratio of about 1:3-5. Shear stress may be applied to the admixture by putting the admixture into a container and stirring the container at a rotational speed of about 69 m/s to 100 m/s for about 10 minutes to 3 hours. The solid electrolyte having a core-shell structure including cores including the first electrolyte and shells including the second electrolyte may be manufactured by applying the shear stress to the mixture.

### EXAMPLE

Hereinafter, the present disclosure will be described in more detail through the following examples. The following examples serve merely to exemplarily describe the present disclosure, and are not intended to limit the scope of the invention.

### Example 1

Lithium sulfide (Li₂S) and phosphorous pentasulfide (P₂S₅) in a molar ratio of 3:0.5 were put into tetrahydrofuran, and were dissolved therein. A solution was acquired by putting 1 mol of lithium bromide (LiBr) into an acquired resultant product. The solution was stirred to cause a reaction. After the reaction has been completed, powder was acquired by sufficiently drying the solution at a temperature of about 150 °C. A first electrolyte represented by Li₆PS₅Br was acquired by heat-treating the powder at a temperature of about 600 °C for 1 hour.

Lithium sulfide (Li₂S) and phosphorous pentasulfide (P₂S₅) in a molar ratio of 3:0.5 were put into tetrahydrofuran, and were dissolved therein. A solution was acquired by putting 1 mol of lithium chloride (LiCl) into an acquired resultant product. The solution was stirred to cause a reaction. After the reaction has been completed, powder was acquired by sufficiently drying the solution at a temperature of about 150 °C. The powder was heat-treated at a temperature of about 600 °C for 1 hour. A second electrolyte represented by LiePSsCl was acquired by grinding a resultant product acquired by heat-treating the powder.

The particle sizes D10, D50 and D90 of the first electrolyte and the second electrolyte are set forth in Table 1 below.

A mixture was manufactured by mixing the first electrolyte and the second electrolyte in a molar ratio of 1:3. A cylindrical container having a wall blade which protrudes towards a central axis from the inner wall of the container was prepared. The mixture was put into the container, and the container was stirred at a rotational speed of 69 m/s for about 10 minutes. Shear stress was applied to the mixture by the wall blade, and thereby, a solid electrolyte having a core-shell structure including cores including Li₆PS₅Br and shells including LiePSsCl was manufactured.

### Comparative Example 1

A solid electrolyte was manufactured using the same method as in Example 1 except that the particle sizes D10, D50 and D90 of the second electrolyte were changed to values, as set forth in Table 1 below.

### Comparative Example 2

A solid electrolyte was manufactured using the same method as in Example 1 except that the particle sizes D 10, D50 and D90 of the second electrolyte were changed to values, as set forth in Table 1 below.

### Comparative Example 3

A solid electrolyte was manufactured using the same method as in Example 1 except that the particle sizes D 10, D50 and D90 of the second electrolyte were changed to values, as set forth in Table 1 below.

### Comparative Example 4

The first electrolyte in Example 1 was set as a solid electrolyte according to Comparative Example 4, and then subsequent tests were conducted.

**Table 1**

| Category | First electrolyte (Li₆PS₅Br) | | | Second electrolyte (Li₆PS₅Cl) | | | Particle type |
|---|---|---|---|---|---|---|---|
| | D10 | D50 | D90 | D10 | D50 | D90 | |
| Example 1 | 5.34 | 15.74 | 47.29 | 1.16 | 3.58 | 9.81 | Core-shell ∘ |
| Comp. example 1 | 5.34 | 15.74 | 47.29 | 1.08 | 9.08 | 15.28 | Core-shell × |
| Comp. example 2 | 5.34 | 15.74 | 47.29 | 3.26 | 9.87 | 15.47 | Core-shell × |
| Comp. example 3 | 5.34 | 15.74 | 47.29 | 4.57 | 14.31 | 41.17 | Core-shell × |
| Comp. example 4 | 5.34 | 15.74 | 47.29 | - | - | - | - |

In Table 1, the unit of the particle sizes D10, D50 and D90 is µm.

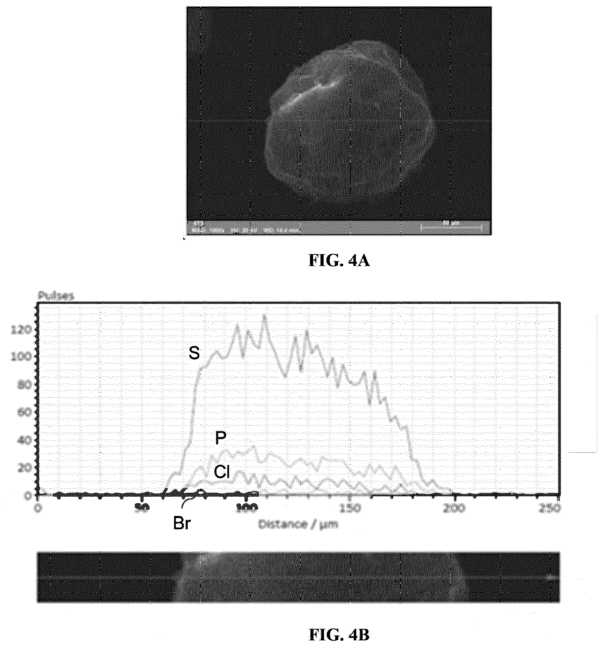

FIG. 4A shows a Scanning Electron Microscope (SEM) image of the solid electrolyte according to Example 1. FIG. 4B shows a graph representing results of Energy Dispersive X-ray Spectroscopy (EDS) of the solid electrolyte according to Example 1. As shown in FIGs. 4A and 4B, the intensity of a peak caused by chlorine (Cl) was greater than the intensity of a peak caused by bromine (Br). Thereby, the solid electrolyte according to Example 1 satisfied the condition that the particle size D50 of the first electrolyte was 1 µm to 40 µm, the particle size D50 of the second electrolyte was 0.5 µm to 20 µm, and the particle size D50 of the first electrolyte was 2 times to 5 times the particle size D50 of the second electrolyte, and thus the core-shell structure was implemented.

On the contrary, in the solid electrolytes according to Comparative Example 1 to Comparative example 4, the core-shell structure was not implemented through Scanning Electron Microscopy (SEM) and Energy Dispersive X-ray Spectroscopy (EDS).

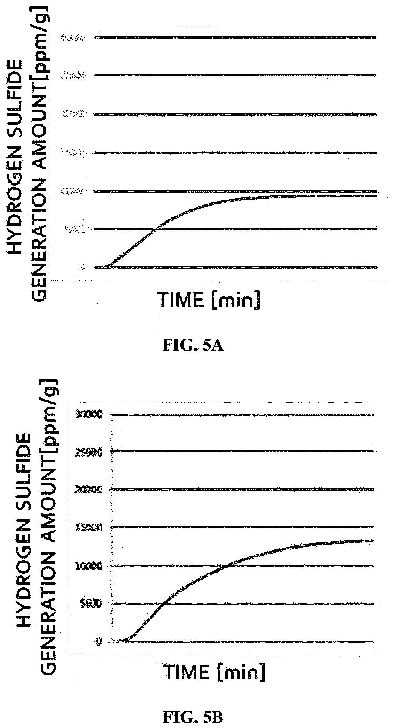

FIG. 5A shows a graph representing results of measurement of a hydrogen sulfide generation amount of the solid electrolyte according to Example 1. FIG. 5B shows a graph representing results of measurement of a hydrogen sulfide generation amount of the solid electrolyte according to Comparative Example 4. The amounts of hydrogen sulfide generation of the solid electrolytes were measured as below. 1 g of the solid electrolytes according to Example 1 and Comparative Example 4 were put into specific containers. The containers were in a closed state except for inlets and outlets thereof. Air having a moisture content of about 20 wt% was injected into the inlets of the containers at a temperature of about 30 °C so that the solid electrolytes react with moisture in the air. Gas discharged through the outlets of the containers was collected, and the amounts of hydrogen sulfide in the gas discharged from the containers were measured.

As shown in FIGs. 5A and 5B, the amount of hydrogen sulfide emitted from the solid electrolyte according to Example 1 was about 96,900 ppm/g, and the amount of hydrogen sulfide emitted from the solid electrolyte according to Comparative Example 4 was about 130,000 ppm/g. Therefore, the solid electrolyte including the cores and shells according to an exemplary embodiment of the present disclosure has excellent atmospheric stability.

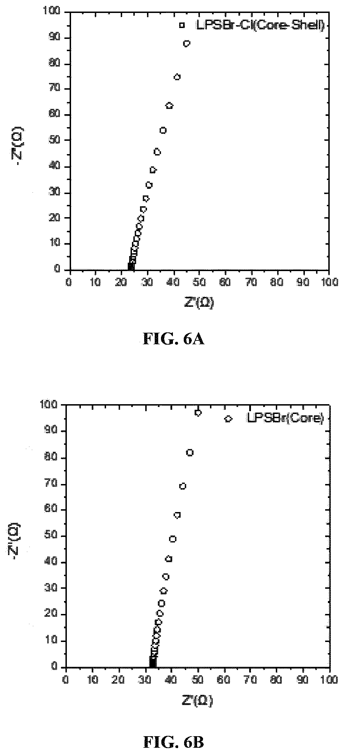

FIG. 6A shows a graph representing results of measurement of lithium ion conductivity of the solid electrolyte according to Example 1. FIG. 6B shows a graph representing results of measurement of lithium ion conductivity of the solid electrolyte according to Comparative Example 4. The lithium ion conductivity of the solid electrolyte according to Example 1 was about 2.45 mS/cm, and the lithium ion conductivity of the solid electrolyte according to Comparative Example 4 was about 1.37 mS/cm. Therefore, the solid electrolyte including the cores and the shells according to an exemplary embodiment of the present disclosure has excellent lithium ion conductivity.

### Example 2

Lithium sulfide (Li₂S) and phosphorous pentasulfide (P₂S₅) in a molar ratio of 3:0.5 were put into tetrahydrofuran, and were dissolved therein. A solution was acquired by putting 1 mol of lithium iodide (LiI) into an acquired resultant product. The solution was stirred to cause a reaction. After the reaction was completed, powder was acquired by sufficiently drying the solution at a temperature of about 150 °C. A first electrolyte represented by Li₆PS₅I was acquired by heat-treating the powder at a temperature of about 600 °C for 1 hour.

Lithium sulfide (Li₂S) and phosphorous pentasulfide (P₂S₅) in a molar ratio of 3:0.5 were put into tetrahydrofuran, and were dissolved therein. A solution was acquired by putting 1 mol of lithium bromide (LiBr) into an acquired resultant product. The solution was stirred to cause a reaction. After the reaction was completed, powder was acquired by sufficiently drying the solution at a temperature of about 150 °C. The powder was heat-treated at a temperature of about 600 °C for 1 hour. A second electrolyte represented by Li₆PS₅Br was acquired by grinding a resultant product acquired by heat-treating the powder.

The particle sizes D10, D50 and D90 of the first electrolyte and the second electrolyte are set forth in Table 2 below.

A mixture was manufactured by mixing the first electrolyte and the second electrolyte in a molar ratio of 1:3. A cylindrical container having a wall blade which protrudes towards a central axis from the inner wall of the container was prepared. The mixture was put into the container, and the container was stirred at a rotational speed of 69 m/s for about 10 minutes. Shear stress was applied to the mixture by the wall blade, and thereby, a solid electrolyte having a core-shell structure including cores including Li₆PS₅I and shells including Li₆PS₅Br was manufactured.

**Table 2**

| Category | First electrolyte (Li₆PS₅I) | | | Second electrolyte (Li₆PS₅Br) | | | Particle type |
|---|---|---|---|---|---|---|---|
| | D10 | D50 | D90 | D10 | D50 | D90 | |
| Example 2 | 4.21 | 30.95 | 354.7 | 5.34 | 15.14 | 47.29 | Core-shell ○ |

In Table 2, the unit of the particle sizes D10, D50 and D90 is µm.

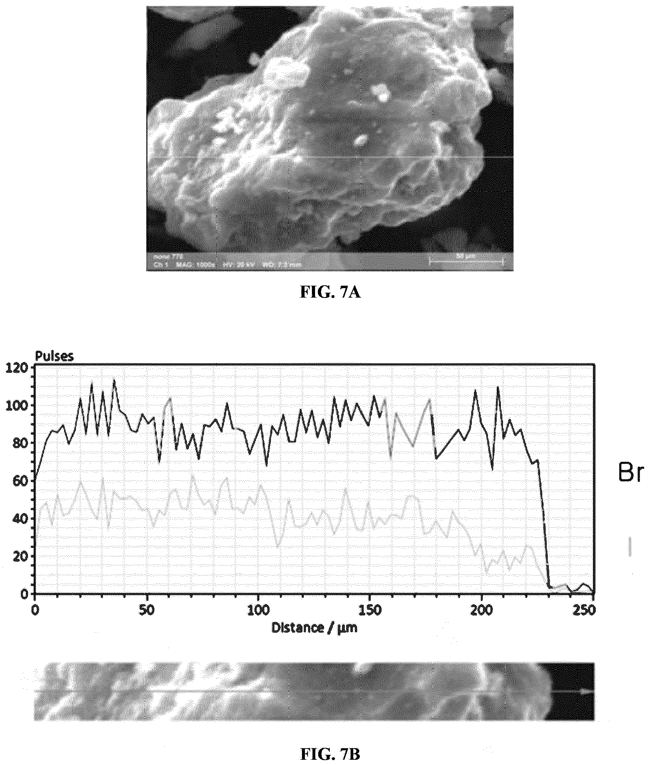

FIG. 7A shows a Scanning Electron Microscope (SEM) image of the solid electrolyte according to Example 2. FIG. 7B shows a graph representing results of Energy Dispersive X-ray Spectroscopy (EDS) of the solid electrolyte according to Example 2. As shown in FIGs. 7A and 7B, the intensity of a peak caused by bromine (Br) was greater than the intensity of a peak caused by iodine (I). Thereby, the solid electrolyte according to Example 2 satisfied the condition that the particle size D50 of the first electrolyte is 1 µm to 40 µm, the particle size D50 of the second electrolyte is 0.5 µm to 20 µm, and the particle size D50 of the first electrolyte is 2 times to 5 times the particle size D50 of the second electrolyte, and thus the core-shell structure was implemented.

### Example 3

Lithium sulfide (Li₂S) and phosphorous pentasulfide (P₂S₅) in a molar ratio of 3:0.5 were put into tetrahydrofuran, and were dissolved therein. A solution was acquired by putting 1 mol of lithium chloride (LiCl) into an acquired resultant product. The solution was stirred to cause a reaction. After the reaction was completed, powder was acquired by sufficiently drying the solution at a temperature of about 150 °C. The powder was heat-treated at a temperature of about 600 °C for 1 hour. A third electrolyte represented by LiePSsCl was acquired by grinding a resultant product acquired by heat-treating the powder.

The particle sizes D10, D50 and D90 of the third electrolyte are set forth in Table 3 below.

A mixture was manufactured by mixing the solid electrolyte according to Example 2 and the third electrolyte in a molar ratio of 1:3. A cylindrical container having a wall blade which protrudes towards a central axis from the inner wall of the container was prepared. The mixture was put into the container, and the container was stirred at a rotational speed of 69 m/s for 10 about minutes. Shear stress was applied to the mixture by the wall blade, and thereby, a solid electrolyte having a core-shell structure including cores including Li₆PS₅I, shells including Li₆PS₅Br, and a skin layer including LiePSsCl was manufactured.

**Table 3**

| Category | Third electrolyte (Li₆PS₅Cl) | | | |
|---|---|---|---|---|
| | D10 | D50 | D90 | Particle type |
| Example 3 | 1.168 | 3.58 | 9.81 | Core-shell ○ |

In Table 3, the unit of the particle sizes D10, D50 and D90 is µm.

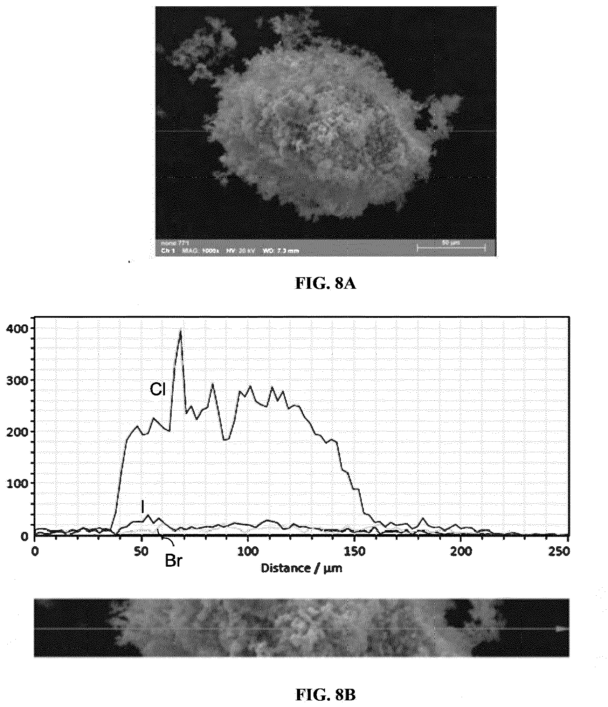

FIG. 8A shows a Scanning Electron Microscope (SEM) image of the solid electrolyte according to Example 3. FIG. 8B shows a graph representing results of Energy Dispersive X-ray Spectroscopy (EDS) of the solid electrolyte according to Example 3. As shown in FIGs. 8A and 8B, the intensity of a peak caused by chloride (Cl) was the strongest, the intensity of a peak caused by bromine (Br) was in the middle range, and the intensity of a peak caused by iodine (I) was the weakest. Thereby, the solid electrolyte according to Example 3 had the core-shell structure including the cores including Li₆PS₅I, the shells including Li₆PS₅Br, and the skin layer including Li₆PS₅Cl.

As is apparent from the above description, a solid electrolyte according to various exemplary embodiments of the present disclosure may have improved atmospheric stability, and thus may generate reduced amount of hydrogen sulfide when the solid electrolyte comes into contact with moisture in the atmosphere.

Further, the solid electrolyte according to various exemplary embodiments of the present disclosure may be soft or non-rigid surface and thus has a high true density and a large contact area between particles, thereby being capable of improving lithium ion conductivity in an all-solid-state battery.

The invention has been described in detail with reference to preferred embodiments thereof. However, it will be appreciated by those skilled in the art that changes may be made in these embodiments without departing from the principles and spirit of the invention, the scope of which is defined in the appended claims and their equivalents.

## Claims

1. A solid electrolyte comprising:
a core comprising a first electrolyte represented by Chemical Formula 1; and
a shell comprising a second electrolyte represented by Chemical Formula 2, and disposed on a surface of the core,
[Chemical Formula 1] LiₐPS_{b}X1_{c},
wherein 4≤a≤7, 3≤b≤7, c 0≤c≤2, and X1 comprises Br or I; and
[Chemical Formula 2] Li_{d}PSₑX2_{f},
wherein 4≤d≤7, 3≤e≤7, 0≤f≤2, and X2 comprises Cl or Br; and
an ionic radius of X1 is greater than an ionic radius of X2.

2. The solid electrolyte of claim 1, wherein:
the first electrolyte comprises Li₆PS₅Br; and
the second electrolyte comprises Li₆PS₅Cl.

3. The solid electrolyte of claim 1 or 2, wherein a particle size D50 of the first electrolyte is 1 µm to 40 µm.

4. The solid electrolyte of one of claims 1-3, wherein a particle size D50 of the second electrolyte is 0.5 µm to 20 µm.

5. The solid electrolyte of one of claims 1-4, wherein a particle size D50 of the first electrolyte is 2 times to 5 times a particle size D50 of the second electrolyte.

6. The solid electrolyte of one of claims 1-5, wherein a pellet density of the solid electrolyte is 1.8 g/ml to 2.0 g/ml.

7. The solid electrolyte of one of claims 1-6, wherein an average particle diameter of the solid electrolyte is 100 µm to 300 µm.

8. The solid electrolyte of one of claims 1-7, wherein a hydrogen sulfide generation amount of the solid electrolyte is equal to or less than 100,000 ppm/g when the solid electrolyte comes into contact with air having a moisture content of 20 wt% at room temperature.

9. The solid electrolyte of one of claims 1-8, further comprising a skin layer disposed on a surface of the shell and comprising a third electrolyte represented by Chemical Formula 3,
[Chemical Formula 3] Li_{g}PSₕX3ᵢ,
wherein
4≤g≤7, 3≤h≤7, 0≤i≤2, and X3 comprises Cl; and
the ionic radius of X2 is greater than an ionic radius of X3.

10. The solid electrolyte of claim 9, wherein:
the first electrolyte comprises Li₆PS₅I;
the second electrolyte comprises Li₆PS₅Br; and
the third electrolyte comprises Li₆PS₅Cl.

11. A method of manufacturing a solid electrolyte, the method comprising:
preparing a first electrolyte represented by Chemical Formula 1;
preparing a second electrolyte represented by Chemical Formula 2;
preparing an admixture comprising the first electrolyte and the second electrolyte; and
manufacturing the solid electrolyte comprising a core comprising the first electrolyte and a shell comprising the second electrolyte and disposed on a surface of the core by applying shear stress to the admixture,
[Chemical Formula 1] LiₐPS_{b}X1_{c},
wherein 4≤a≤7, 3≤b≤7, 0≤c≤2, and X1 comprises Br or I; and
[Chemical Formula 2] Li_{d}PSₑX2_{f},
wherein 4≤d≤7, 3≤e≤7, 0≤f≤2, and X2 comprises Cl or Br; and
an ionic radius of X1 is greater than an ionic radius of X2.

12. The method of claim 11, wherein preparing the first electrolyte comprises:
preparing a first solution comprising first precursors and a first organic solvent;
preparing a first powder by drying the first solution at a temperature of 80 °C to 150 °C; and
heat-treating the first powder at a temperature of 200 °C to 600 °C for 1 hour to 24 hours.

13. The method of claim 11 or 12, wherein preparing the second electrolyte comprises:
preparing a second solution by dissolving second precursors in a second organic solvent;
obtaining a second powder by drying the second solution at a temperature of 80 °C to 150 °C;
heat-treating the second powder at a temperature of 200 °C to 600 °C for 1 hour to 24 hours to obtain a heat treated second powder; and
grinding the heat treated second powder.

14. The method of one of claims 11-13, wherein a particle size D50 of the first electrolyte is 1 µm to 40 µm, wherein a particle size D50 of the second electrolyte is 0.5 µm to 9 µm, wherein a particle size D50 of the first electrolyte is 2 times to 5 times a particle size D50 of the second electrolyte.

15. The method of one of claims 11-14, wherein a hydrogen sulfide generation amount of the solid electrolyte is equal to or less than 100,000 ppm/g when the solid electrolyte comes into contact with air having a moisture content of 20 wt% at room temperature.
